# EUROPEAN PATENT APPLICATION

(11) **EP 2 063 105 A2**
(43) Date of publication of application: **27.05.2009**
(21) Application number: 08382041.5
(22) Date of filing: 07.10.2008
(51) Int. Cl.: F03D 3/00, F03D 3/04, F03D 9/00

(54) **Horizontal-axis wind generator**

(30) Priority: 19.10.2007 ES 200702751
(71) Applicant: Teilo Alabarte S.L., 01306 La Puebla de la Barca - Alava (ES)
(72) Inventor: Echepare Fernandez, Enrique, 01306 La Puebla De La Barcia - Alava (ES)
(74) Representative: Urizar Anasagasti, Jesus Maria

(57) **Abstract**

The invention relates to a horizontal-axis wind generator, comprising a platform (2) capable of rotating according to a vertical axis (1), which incorporates a support structure (3) for supporting a horizontal shaft (4) of a wind turbine (5), which moves an electric generator (15) and which is formed by several blades (6) which are located facing the wind when the base platform (2) rotates by virtue of an electronic control device connected to a wind vane determining the suitable orientation; said wind turbine (5) having, in the direction of entrance or attack of the wind to its blades, respective solar plates or panels (7-8), a lower plate or panel (7) inclined in a slope closing the lower area of the turbine and another lowerable upper plate or panel (8) which is located in a horizontal or downwardly inclined upwardly open position, closing the air inlet to the turbine depending on the wind conditions.

## Description

### Object of the Invention

As indicated by its title, the present invention relates to an electric power generator from wind energy by means of a wind turbine moving an electric generator. This turbine is complemented with a series of photovoltaic panels which also generate electric current; such that when there is not enough wind to move the wind turbine the photovoltaic panels are oriented to the sun so that they carry out their function.

### Background of the Invention

There are currently several models of wind generators, both horizontal-axis and vertical-axis generators. Horizontal-axis generators are the most known, they have a large mast at the upper part of which the actual generator is assembled, which generator is moved by three large blades or vanes. These type of wind generators have a great environmental impact, especially a visual impact, and do not admit a mixed capturing system since the use of solar panels at this height would not be operative, neither would it be feasible to suitably orient them to the sun.

In the patent literature there are precedents of an attempt to conjugate both technologies in one and the same machine, but the practical results have not come to fruition, it is supposed that the main problem is the necessary change of philosophy in the wind generator so that it can coexist together with photovoltaic plates.

### Description of the Invention

Despite the greater environmental impact, wind generators are more productive than photovoltaic plates, an attempt will therefore be made to give priority to the use of this machine, initially a mixed machine, as a wind generator and to only use it making the maximum use of the solar plates, orienting them to the sun, when there is not enough wind so as to move the wind generator.

This generator is assembled on a concrete base on which a platform is rotated according to a vertical axis, on which there is assembled a support structure for supporting the horizontal shaft of a wind turbine, which moves an electric generator. The rotating platform of the base is oriented by virtue of an electronic control device connected to a wind vane determining the direction of the wind.

This turbine is formed by several blades with a crescent-shaped profile, the cavity of which faces the wind to achieve its rotation. To improve its operation, the placement of respective plates or panels in the direction of entrance or attack of the wind has been provided, a lowerable upper plate or panel and another lower plate or panel which is fixed and inclined in a slope closing the lower area of the turbine, forming between both a funnel orienting the air towards the upper area of the turbine, in which the blades are located in a driving direction, the lower area in which the blades return with the convex face in that direction being protected. The upper plate is articulated in the area located above the turbine, being located in an upwardly open position upwards the air conditions are minimal for the purpose of favoring the operation of the wind turbine; nevertheless when the wind conditions are greater and the machine has reached the maximum power regimen, this plate is located horizontally or is downwardly inclined, closing the air inlet to the turbine in order to not force the machine when the wind reaches excessive speeds.

According to the invention, the plates which allow orienting the air into the turbine, both at the lower and the upper part, are formed by photovoltaic plates. The upper plate rotates on an axis and its position, when there is enough wind to drive the wind turbine, as has been explained above, depends on the speed of the wind. However, when the wind does not reach a sufficient speed to drive the turbine, this plate is located downwardly inclined or horizontally such that it is located perpendicular to the sun, a task for which a solar tracker which also orients the lower rotating platform is responsible. When the wind again reaches the pre-calculated minimum force for the correct operation of the wind turbine, the upper plate returns to an open position and the orientation of the platform becomes that in which the turbine faces the wind, as has already been indicated above.

Initially, two photovoltaic plates articulated in a horizontal shaft have been provided: a rear plate and other front plate with respect to the turbine, the front plate acting such that it controls the opening of air towards it as has been explained above and thus, when it is operating, the turbine adopts a horizontal or slightly downwardly inclined upwardly open position, and when the machine operates as a photovoltaic generator it is located suitably inclined at an angle marked by the solar tracker of the machine; in such circumstances the rear plate is placed as an extension of the latter, forming as a whole a continuous surface. When the machine adopts a protective position due to excessive wind, the front plate is inclined until abutting against the lower fixed lower plate, thus closing the air inlet duct in the turbine.

To prevent the deterioration of the machine in the event of a gale or strong wind, it has been provided that the mentioned electronic control device orients it with the inlet duct to the turbine in favor of the direction of the wind, but with the upper plates downwardly inclined, such that they close the air inlet duct, deflecting it upwards.

Another possible action to protect the machine in the event of a very strong wind consists of arranging a rear deflector, located at the lower part of the wind turbine, which would face the wind when it reaches a speed greater than an established limit, as in this position the blades of said turbine are located in a position opposite to the wind, it would not negative effects on it. In these circumstances the solar plates can be horizontally placed so that they do not affect the wind either positively or negatively, or also in a rear position, closing the upper part of the turbine, which in such circumstances would be completely protected from the wind, as in the case set forth in the previous paragraph.

The visual impact of this machine is considerably smaller than that of a conventional wind generator, since it can reach at most 1/3 of its height. The fact that electric power is also obtained from the photovoltaic panels which it incorporates in wind absence conditions, which normally occur in summer, considerably improves the efficiency of this machine with respect to conventional machines.

### Description of the Drawings

To complement the description which is being made and with the aim of facilitating the understanding of the features of the invention, a set of drawings is attached to this specification, in which the following has been shown with an illustrative and non-limiting character:
Figure 1 shows a side elevational view of the wind generator object of the present invention, particularly when it operates as a wind generator.
Figure 2 is side elevational view of the same machine as the previous figure, when it operates as a photovoltaic generator.

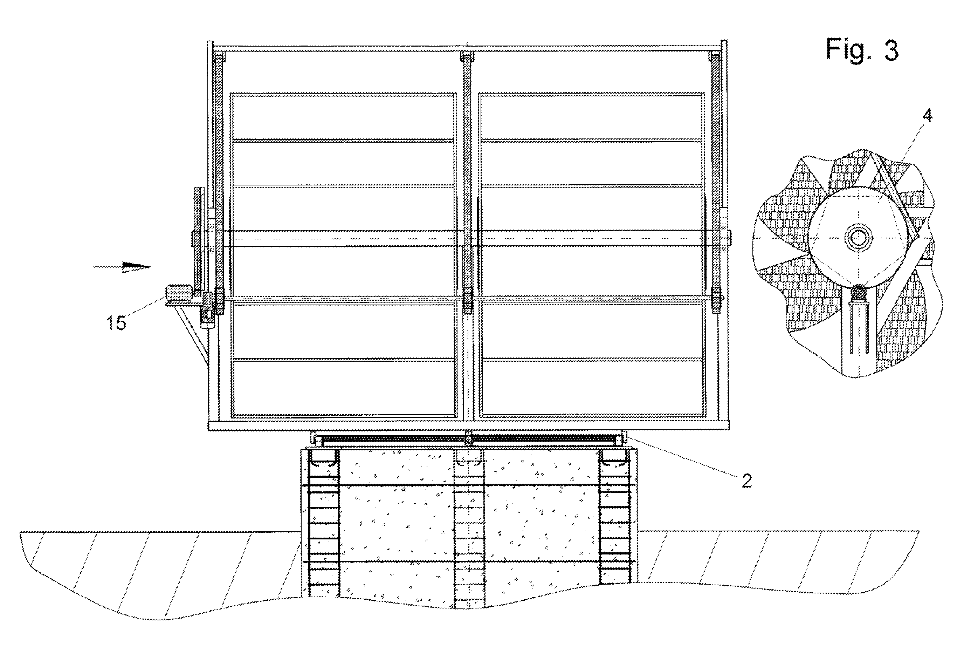

Figure 3 is a front elevational view of the machine of the previous figures.

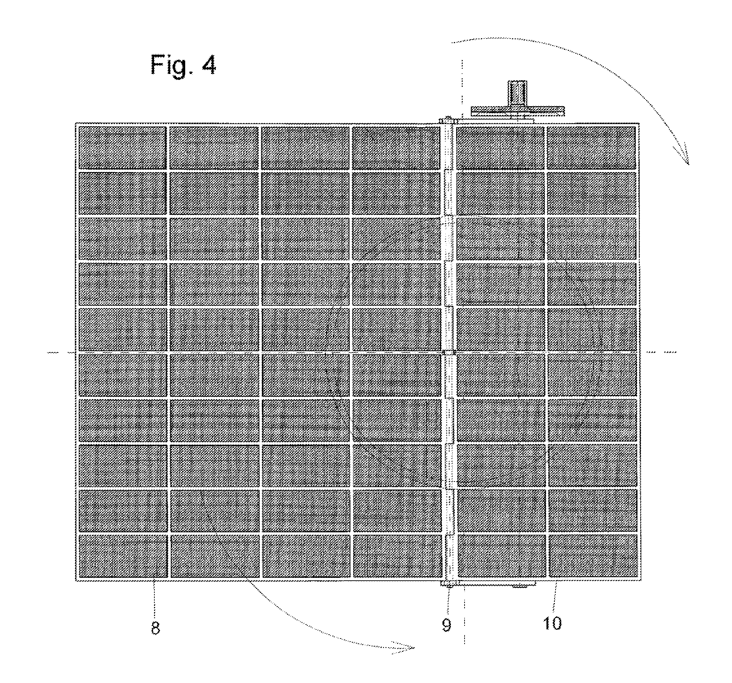

Figure 4 shows an upper plan view of this machine.
Figure 5 shows a side elevational view of this machine when it is in a protective position due to a very strong wind.
Figure 6 is a side elevational view of another embodiment variant of the protective system of the machine when there is a very strong wind.

### Preferred Embodiment of the Invention

As can be observed in the referenced figures, the generator object of the present invention is assembled on a concrete structure (11), at the upper part of which it has a rotating platform (2) rotating on a vertical axis (1) by virtue of a geared motor (15) which is commanded by an electronic device. This platform (2) has thereon a support structure (3) for supporting a horizontal shaft (4) of a wind turbine (5), formed by several radial blades (6) which are located facing the wind when the platform (2) rotates freely.

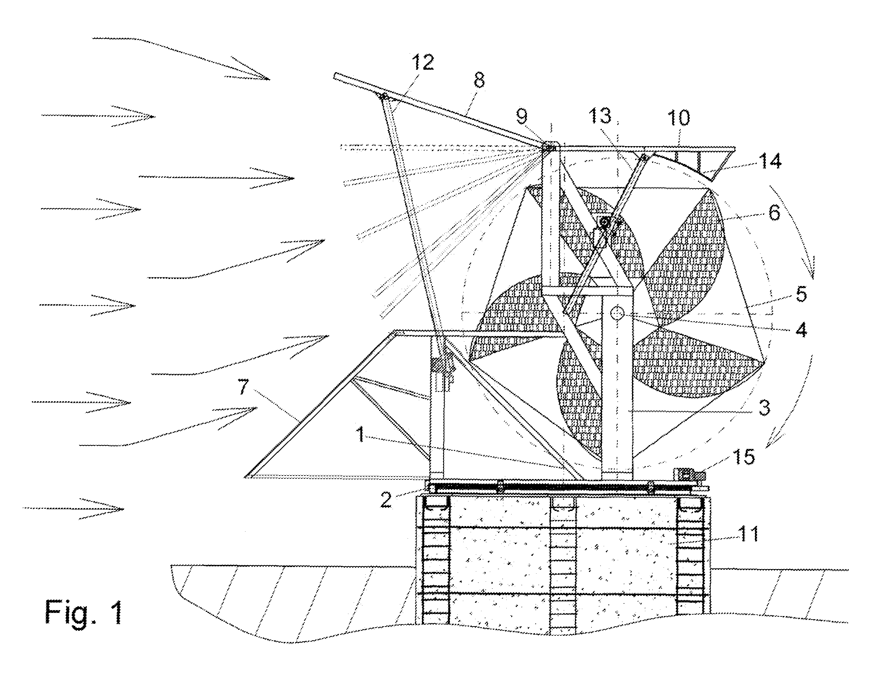

The blades (6) forming the turbine (5) are elongated plates with a crescent-shaped profile, all of them are placed in the same position following a rotational direction, such that those located at the upper part face the wind with the concave shape, whereas those located at the lower area show the convex area. To achieve an optimal operation of this turbine, the platform (2) is rotated until locating the blades of the turbine (5) in the direction of entrance or attack of the wind; in this area there are located respective plates or panels: a lower plate or panel (7) which is fixed and inclined in a slope, closing the lower area of the turbine (5) and another upper plate or panel (8) which in an operative position is located upwardly open as shown in Figure 1, forming between both a funnel orienting the air towards the upper area of the turbine in which the blades (6) are located in a driving direction, the lower area in the which the blades show the convex face in the return direction being protected.

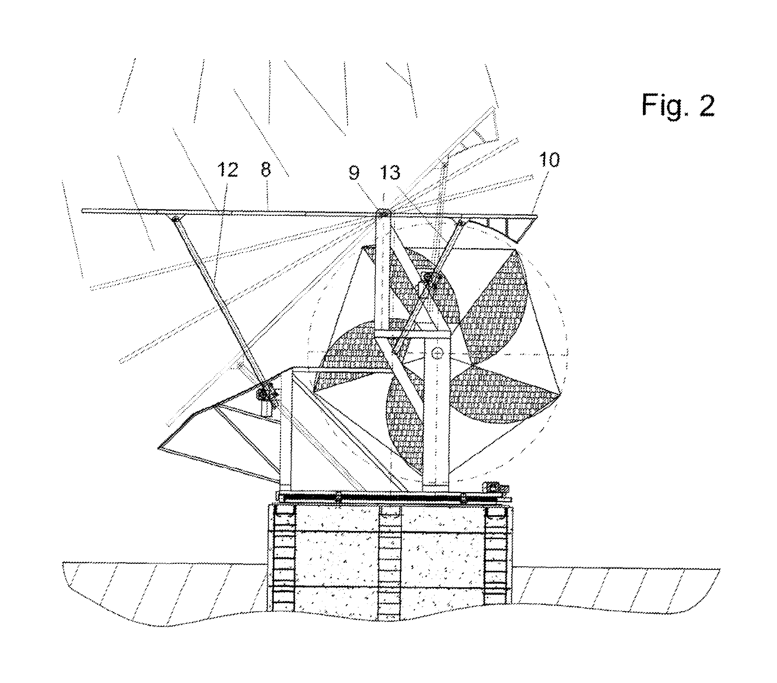

When there is not enough wind to move the wind turbine (5), the machine operates as a photovoltaic generator, for this purpose the plate (8) closing the turbine above is a solar panel which is articulated in a shaft (9), in which a second solar plate (10) is also articulated, which second solar plate has below a deflector (14) serving as guide to the outlet air of the turbine. These plates (8-10) are respectively supported by means of respective ties (12-13) which allow varying their inclination such that when the machine works as a wind generator (see Figure 1) and when the machine works as a photovoltaic generator, it is located with the suitable inclination for its better orientation to the sun, depending on the seasonal phase controlling a solar tracker, which likewise determines the rotation of the platform (2) to have at all times the suitable east-west orientation in the solar plates (8-10) (see Figure 2).

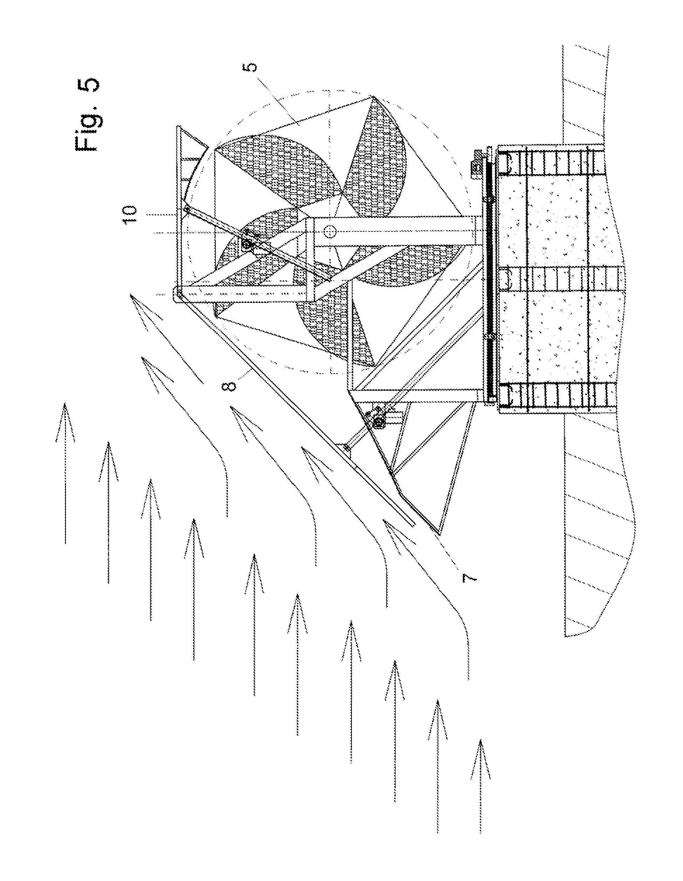

Figure 5 shows a protective situation of the machine when there is a very strong wind which might cause a serious failure in the operation as a wind turbine. In such circumstances, the electronic control thereof inclines the plate (8) until completely closing the air inlet duct to the turbine and rotates the platform (2) until orienting the inlet of the turbine towards the wind for the purpose of deflecting it upwards.

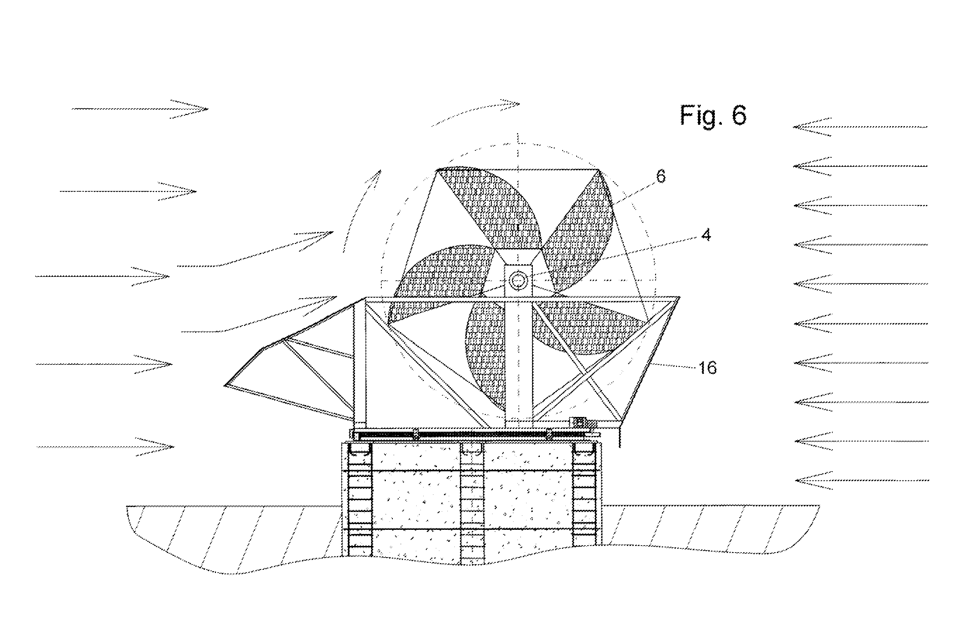

Figure 6 shows a solution different from the previous one for protecting the machine when there is a very strong wind. In this case a deflector (16) has been provided on the face opposite to the inlet (7), such that when such circumstances occur it is the rear face of the machine (the right one in Figure 6) which faces the wind, such that upon driving the turbine by the convex face of the blades the drive which it receives is considerably lower than at its active face.

Having sufficiently described the nature of the invention as well as a preferred embodiment, it is stated for the relevant purposes that the materials, shape, size and arrangement of the described elements can be modified, provided that this does not involve an alteration of the essential features of the invention which are claimed below:

## Claims

1. A horizontal-axis wind generator, comprising a base structure on which a wind turbine is assembled, which wind turbine moves an electric generator and preferably a series of photovoltaic panels which are operative when there is not enough wind for the operation of the wind generator, **characterized in that** it comprises a platform (2) capable of rotating according to a vertical axis (1), which incorporates a support structure (3) for supporting a horizontal shaft (4) of a wind turbine (5), which moves an electric generator (15) and which is formed by several blades (6), which are located facing the wind when the base platform (2) rotates by virtue of an electronic control device connected to a wind vane determining the suitable orientation; said wind turbine (5) having, in the direction of entrance or attack of the wind to its blades, respective plates or panels (7-8), a lower plate or panel (7) inclined in a slope closing the lower area of the turbine and another lowerable upper plate or panel (8) which is articulated in the area located above the turbine and is located in a horizontal or downwardly inclined upwardly open position, closing the air inlet to the turbine depending on the wind conditions, forming between both a funnel for orienting the inlet air towards the upper area of the wind turbine (5) tending to favor the drive thereof when there is wind in any direction.

2. The generator according to the previous claim, **characterized in that** at least the upper plate (8) for orienting the air into the turbine (5) is formed by one or more photovoltaic plates, which rotate on a shaft (9) to be oriented perpendicular to the sun by means of a solar tracker which also commands the rotation of the lower platform (2), orienting it in the suitable east-west direction when there is no appreciable wind in any direction.

3. The generator according to the previous claims, **characterized in that** the wind turbine (5) is formed by several blades (6), formed by radially arranged elongated plates having a crescent-shaped profile, the cavity of which faces the wind in an operative position, the return area, in which the convex part faces the wind, being closed by means of a lower plate or panel (7) inclined in a slope.

4. The generator according to the previous claims, **characterized in that** said electronic control device provides the orientation of the inlet duct to the turbine (5) in favor of the direction of the wind when the latter reaches a speed greater than an established limit and the downward inclination of the plates (8), such that they close the air inlet duct to deflect it upwards, for the purpose of preventing the deterioration of the machine due to excessive wind.

5. The generator according to claims 1 to 3,
**characterized in that** said electronic control device provides the orientation of the wind turbine against the direction of the wind when the latter reaches a speed greater than an established limit, having in such circumstances a rear-lower deflector (16) facing the wind when the latter reaches a speed greater than an established limit, in which the blades of said turbine are located opposite to the wind.

6. The generator according to claim 2, **characterized in that** the upper photovoltaic plates are divided into two areas (8-10) articulated in a horizontal shaft (9) and supported by respective ties (12-13), which are located in an inclined manner, one being an extension of the other one forming a continuous surface which the solar tracker is in responsible for placing perpendicular to the sun when the machine works as a photovoltaic generator, whereas when the machine operates as a wind generator, the front plate (8) opens to a greater or lesser extent depending on the speed of the wind, whereas the rear plate (10) is located horizontally and has an arched lower deflector (14) guiding the outlet air of the wind turbine.
